# EUROPÄISCHE PATENTANMELDUNG

(11) **EP 2 574 481 A2**
(43) Veröffentlichungstag der Anmeldung: **03.04.2013**
(21) Anmeldenummer: 12186007.6
(22) Anmeldetag: 26.09.2012
(51) Int. Cl.: B60G 15/06, F16C 17/10, F16C 33/20, F16F 9/54

(54) **Federbeinlager bei einer lenkbaren Kraftfahrzeugaufhängung**

(30) Priorität: 30.09.2011 DE 102011083905
(71) Anmelder: KS Gleitlager GmbH, 68789 St. Leon-Rot (DE)
(72) Erfinder: Kovacevic, Mitar, 74232 Abstatt (DE); Höne, Wilfried, 65232 Taunusstein (DE)
(74) Vertreter: Dreiss

(57) **Zusammenfassung**

Die Erfindung betrifft ein Federbeinlager (2) bei einer lenkbaren Kraftfahrzeugradaufhängung, mit einem ersten Gehäuseteil (4), welches gegen eine Kraftfahrzeugkarosserie abstützbar ist, und mit einem mit dem ersten Gehäuseteil (4) komplementär in Eingriff stehenden zweiten Gehäuseteil (6), welches gegenüber dem ersten Gehäuseteil (4) um eine Gehäuselängsachse (8) in Umfangsrichtung drehbar ist und gegen ein Stoßdämpferrohr fixiert ist, wobei zwischen dem ersten Gehäuseteil (4) und dem zweiten Gehäuseteil (6) eine axial wirkende Gleitlageranordnung (10) vorgesehen ist, wobei die Gleitlageranordnung (10) eine metallische Ringscheibe (20) und eine polymere Kunststoffgleitscheibe (34) umfasst, wobei die metallische Ringscheibe (20) und die polymere Kunststoffgleitscheibe (34) mit ihren einander axial zugewandten Seiten gleitend gegeneinander anliegen; das Federbeinlager ist dadurch gekennzeichnet, dass die metallische Ringscheibe (20) in dem ersten Gehäuseteil (4) in der Umfangsrichtung drehfest gehalten ist und dass die Kunststoffgleitscheibe (34) gegen das zweite Gehäuseteil (6) durch formschlüssig wirkende Mittel in der Umfangsrichtung drehfest gehalten ist.

## Beschreibung

Die Erfindung betrifft ein Federbeinlager bei einer lenkbaren Kraftfahrzeugradaufhängung, mit einem ersten Gehäuseteil, welches gegen eine Kraftfahrzeugkarosserie abstützbar ist, und mit einem mit dem ersten Gehäuseteil komplementär in Eingriff stehenden zweiten Gehäuseteil, welches gegenüber dem ersten Gehäuseteil um eine Gehäuselängsachse in Umfangsrichtung drehbar ist und gegen ein Stoßdämpferrohr fixiert ist, wobei zwischen dem ersten Gehäuseteil und dem zweiten Gehäuseteil eine axial wirkende Gleitlageranordnung vorgesehen ist, wobei die Gleitlageranordnung eine metallische Ringscheibe und eine polymere Kunststoffgleitscheibe umfasst, wobei die metallische Ringscheibe und die polymere Kunststoffgleitscheibe mit ihren einander axial zugewandten Seiten gleitend gegeneinander anliegen.

Ein derartiges Federbeinlager ist beispielsweise bekannt aus EP-A-2 128 464 A1. Weitere Federbeinlager sind bekannt aus DE 10 2008 057 590 A1 oder DE 20 2010 009 490 U1.

Durch Verwendung eines Federbeinlagers bei einer lenkbaren Kraftfahrzeugaufhängung soll eine möglichst leichtgängige und reibungsarme Drehbewegung des einerseits gegen die Karosserie und andererseits gegen ein Stoßdämpferrohr abgestützten Federbeins bei Lenkbewegungen möglich sein. Es wurden in der Vergangenheit Wälzlager eingesetzt, die eine aufwändige und teure Konstruktion implizieren. Bei den beiden vorausgehend erwähnten vorbekannten Federbeinlagern wurden bereits Gleitlager eingesetzt, bei denen jedoch die gegeneinander gleitenden Flächen undefiniert gelagert sind, da eine weitgehend schwimmende Lagerung der Gleitelemente und insbesondere der Kunststoffgleitscheibe realisiert ist.

Der vorliegenden Erfindung liegt daher die Aufgabe zugrunde, ein Federbeinlager der eingangs genannten Art dahingehend zu verbessern, dass der Reibwert gering gehalten wird, so dass die Lebensdauer des Federbeinlagers insgesamt erhöht werden kann.

Diese Aufgabe wird bei einem Federbeinlager der genannten Art erfindungsgemäß dadurch gelöst,dass die metallische Ringscheibe in dem ersten Gehäuseteil in der Umfangsrichtung drehfest gehalten ist und dass die Kunststoffgleitscheibe gegen das zweite Gehäuseteil durch formschlüssig wirkende Mittel in der Umfangsrichtung drehfest gehalten ist.

Dadurch, dass die Gleitlageranordnung zum einen eine metallische Ringscheibe und zum anderen eine polymere Kunststoffgleitscheibe als unmittelbar gegeneinander anliegende Gleitpartner verwendet, wird der Reibwert gegenüber einer Ausführungsform, bei der Gleitelemente aus Kunststoff gegeneinander oder gegen Gehäuseteile aus Kunststoff gleiten, reduziert. Durch die beanspruchte Fixierung der beiden Gleitpartner, also der metallischen Ringscheibe und der polymeren Kunststoffgleitscheibe, gegen das jeweilige Gehäuseteil wird zudem eine definierte Anordnung und Ausgestaltung der Gleitlageranordnung realisiert, was sich ebenfalls im Hinblick auf die Optimierung der tribologischen Bedingungen und im Hinblick auf die Erhöhung der Lebensdauer als vorteilhaft erweist.

Bei der metallischen Ringscheibe handelt es sich vorzugsweise um eine Stahlscheibe, die daher per se sehr stabil ist. Die gegenüber der Stahlscheibe vorzugsweise dickere polymere Kunststoffgleitscheibe ist nach einer bevorzugten Ausführungsform der Erfindung aus POM (Polyoxymethylen) oder aus PE (Polyäthylen) gebildet, wobei auch andere polymere Kunststoffmaterialien hierfür in Frage kommen, wie z.B. vorzugsweise PVDF oder PTFE, oder PEEK. Des Weiteren kann das polymere Kunststoffmaterial weitere tribologisch wirksame Füllstoffe der auf dem Gebiet der Gleitlagertechnik üblichen Art umfassen.

In weiterer Ausbildung der Erfindung wird vorgeschlagen, dass das erste Gehäuseteil ungefähr topfförmig ausgebildet ist und das zweite Gehäuseteil in Richtung der Gehäuselängsachse darin einsetzbar ist. Das erste Gehäuseteil bildet also eine Art topfförmige Kavität und umgibt das darin eingesetzte zweite Gehäuseteil auch radial außen. Auf diese Weise kann eine kompakte Bauform erreicht werden, und es kann hierdurch eine konzentrisch geführte gegeneinander drehbare Anordnung der beiden Gehäuseteile bezüglich der Gehäuselängsachse realisiert werden.

In weiterer Ausbildung der Erfindung erweist es sich als vorteilhaft, wenn das eine oder das andere Gehäuseteil und vorzugsweise beide Gehäuseteile einen radial inneren Ringbund aufweisen, welcher die metallische Ringscheibe bzw. die Kunststoffgleitscheibe in dem betreffenden Gehäuseteil zentriert und somit lagemäßig definiert und auch in radialer Richtung formschlüssig hält. Hierfür ist es möglich, die metallische Ringscheibe mit dem Kunststoffmaterial des Gehäuseteils zu umspritzen oder in das Gehäuseteil einzulegen.

Weiter kann es sich als vorteilhaft erweisen, dass der erwähnte Ringbund eine konzentrische Durchgangsöffnung in dem Gehäuseteil begrenzt, die zu weiteren Montagezwecken, etwa zum Aufschieben oder Lagern des einen Gehäuseteils bezüglich des Stoßdämpferrohrs und des anderen Gehäuseteils bezüglich der Karosserie dient.

Nach einem weiteren Erfindungsgedanken von besonderer Bedeutung erweist es sich als vorteilhaft, wenn die Kunststoffgleitscheibe durch formschlüssig wirkende Mittel gegen das ihr zugeordnete Gehäuseteil in Umfangsrichtung drehfest gehalten ist. Auch diese weitere Maßnahme dient zur Fixierung und Lagesicherung der Kunststoffgleitscheibe gegenüber dem betreffenden Gehäuseteil.

Die erwähnten formschlüssigen Mittel, durch welche die Kunststoffgleitscheibe gegen das ihr zugeordnete Gehäuseteil in Umfangsrichtung drehfest gehalten ist, können vorzugsweise dadurch gebildet sein, dass das betreffende Gehäuseteil in axialer Richtung erstreckte Ausnehmungen aufweist, in welche das Material der Kunststoffgleitscheibe eingreift. Auf diese Weise ist dann eine formschlüssige Lagesicherung in Umfangsrichtung erreicht oder unterstützt. Die erwähnten Ausnehmungen können dabei zudem in radialer Richtung erstreckt und in Umfangsrichtung aufeinanderfolgend, also gewissermaßen alternierend, angeordnet sein. Die Ausnehmungen können in an sich beliebiger Weise hergestellt werden, insbesondere durch eine fräsende oder spanende Bearbeitung, oder sie können vorzugsweise im Zuge der Ausbildung des betreffenden Gehäuseteils im Spritzgussverfahren hergestellt sein.

Des Weiteren wäre es denkbar, dass die Kunststoffgleitscheibe entsprechend komplementär ausgebildet und in die erwähnten Ausnehmungen eingreifend gegen das Gehäuseteil fixiert wird. Sie kann zusätzlich zu der formschlüssigen Fixierung gegen das Gehäuseteil verklebt werden.

Weitere Einzelheiten, Merkmale und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
- Figur 1: eine perspektivische Ansicht des erfindungsgemäßen Federbeinlagers;
- Figur 2: eine Ansicht in Richtung der Gehäuselängsachse betrachtet;
- Figur 3: eine Schnittansicht mit einer durch den Mittelpunkt gehenden Schnittebene;
- Figur 4: eine Schnittansicht mit Schnittebene A-A aus Figur 2; und

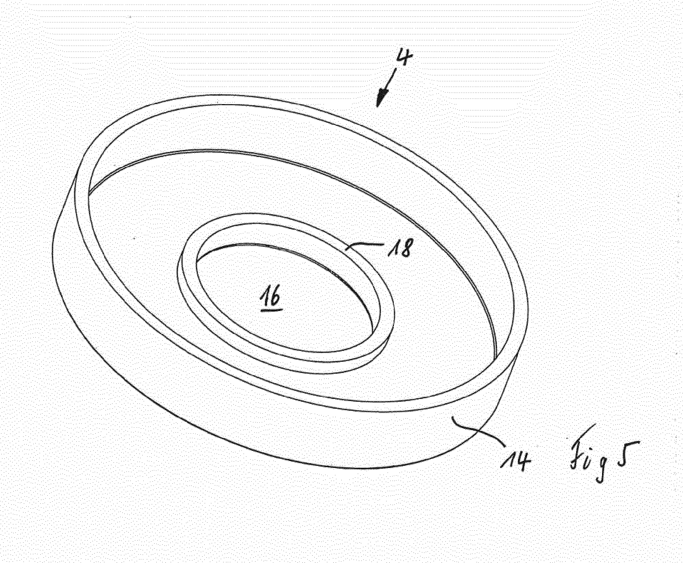

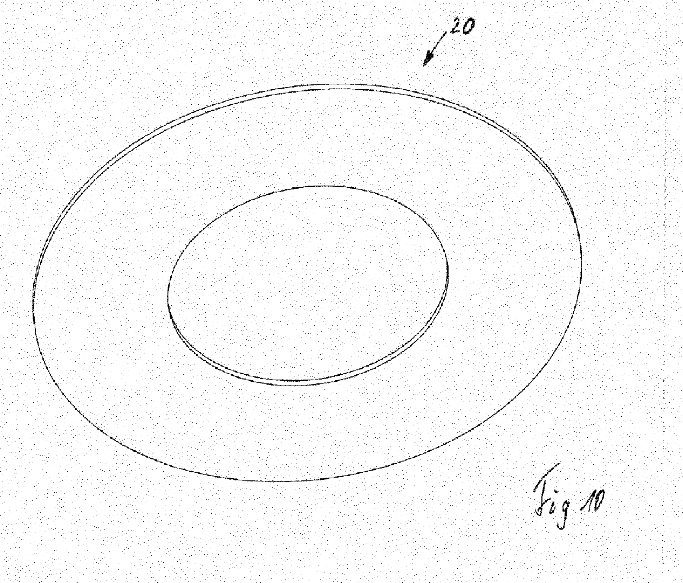

- Figuren 5 bis 10: perspektivische Ansichten der Komponenten des erfindungsgemäßen Federbeinlagers.

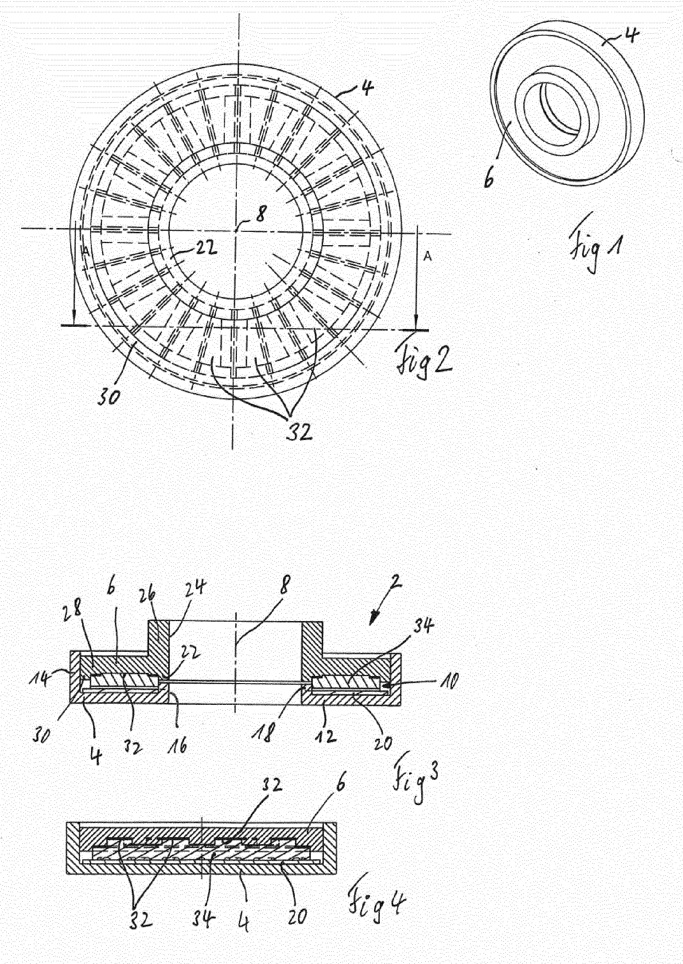

Figur 1 zeigt ein insgesamt mit dem Bezugszeichen 2 bezeichnetes Federbeinlager für eine lenkbare Kraftfahrzeugradaufhängung. Aus den Figuren 2 bis 4 sind die Bestandteile des Federbeinlagers 2 und der Zusammenbau ersichtlich. Das Federbeinlager 2 umfasst ein erstes im beispielhaft dargestellten Fall topfförmig ausgebildetes Gehäuseteil 4 und ein zweites komplementär mit dem ersten Gehäuseteil 4 in Eingriff stehendes zweites Gehäuseteil 6. Das erste Gehäuseteil stützt sich beim bestimmungsgemäßen Betrieb bei einer Kraftfahrzeugradaufhängung gegen eine Fahrzeugkarosserie axial ab und ist dabei vorzugsweise auch lagefixiert. Das zweite Gehäuseteil ist gegen ein Stoßdämpferrohr der Kraftfahrzeugradaufhängung montiert. Das erste Gehäuseteil und das zweite Gehäuseteil sind relativ zueinander um eine Gehäuselängsachse 8 drehbar. Zwischen dem ersten Gehäuseteil 4 und dem zweiten Gehäuseteil 6 ist eine axial wirkende Gleitlageranordnung 10 vorgesehen, die nachfolgend noch näher beschrieben werden wird. Um ein Eindringen von Feuchtigkeit und Schmutz sowie ein Austreten von Schmiermittels zu verhindern, kann das topfförmige Gehäusebauteil mit einer Dichtung ausgeführt werden.

Wie erwähnt ist das erste Gehäuseteil 4 im beispielhaft dargestellten Fall topfförmig ausgebildet, d.h. es umfasst einen axialen Boden 12 und eine Umfangswandung 14. Der axiale Boden 12 ist jedoch nicht geschlossen, sondern er umfasst eine bezüglich der Gehäuselängsachse 8 konzentrische Durchgangsöffnung 16, die nach innen durch einen Ringbund 18 begrenzt wird. Zwischen dem Ringbund 18 und der Umfangswandung 14 ist ein kreisscheibenförmiger Aufnahmeraum ausgebildet, in der der eine Teil der Gleitlageranordnung 10 fixiert ist. Bei diesem einen Teil der Gleitlageranordnung 10 handelt es sich um eine metallische Ringscheibe 20, vorzugsweise aus Stahl. Diese Ringscheibe 20 ist in den Aufnahmeraum eingepresst und/oder eingeklebt oder durch sonstige Mittel fest und für den bestimmungsgemäßen Gebrauch vorzugsweise unlösbar fixiert. Die Ringscheibe 20 könnte auch aus mehreren Segmenten gebildet sein.

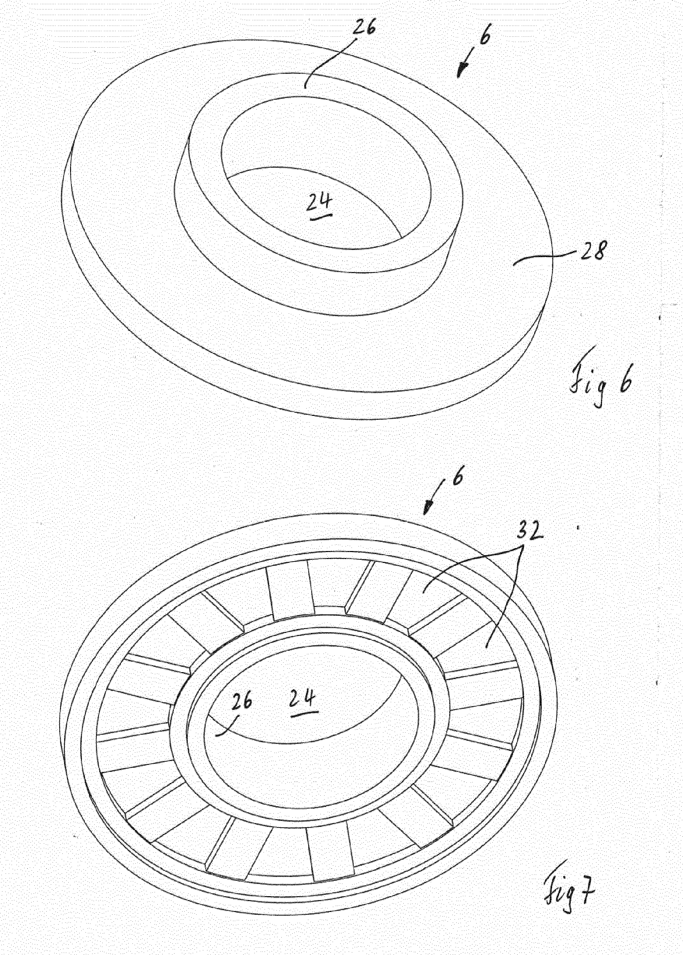

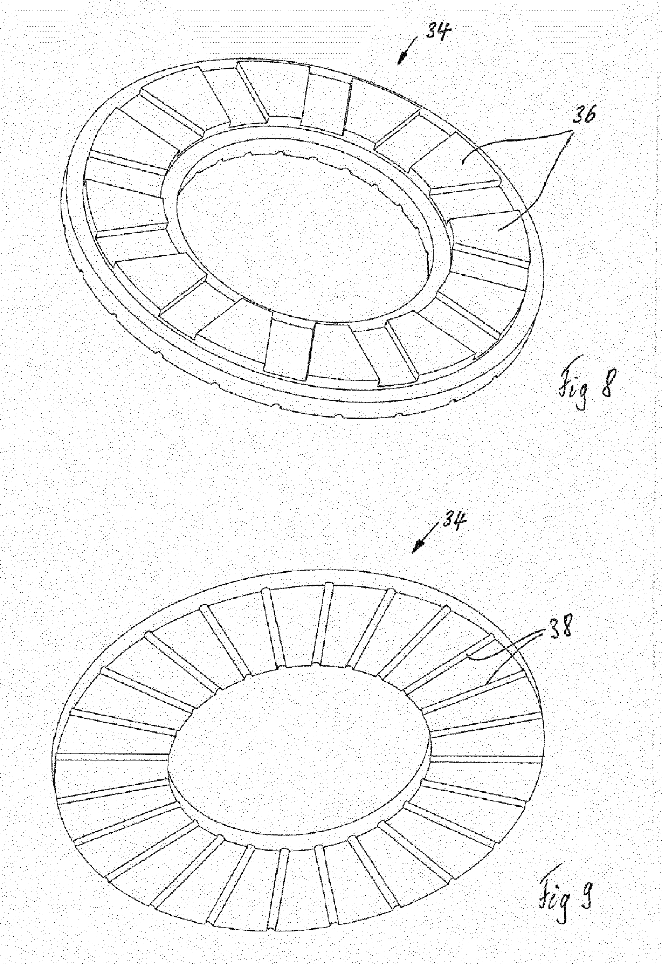

Das zweite Gehäuseteil 6 ist so ausgebildet, dass es komplementär in den topfförmigen Raum, der durch die Umfangswandung 14 des ersten Gehäuseteils 4 definiert wird, eingesetzt werden kann. Auch das zweite Gehäuseteil 6 weist einen inneren Ringbund 22 auf, der axial dem Ringbund 18 gegenüberliegt und eine mit der Durchgangsöffnung 16 fluchtende Durchgangsöffnung 24 begrenzt. Des Weiteren weist das zweite Gehäuseteil 6 einen zylindrischen Bereich 26 und einen davon radial nach außen erstreckten Flanschbereich 28 auf. An dem Flanschbereich 28 ist radial innen der erwähnte innere Ringbund 22 ausgebildet. Radial außen ist ein weiterer äußerer Ringbund 30 ausgebildet. Zwischen dem radial inneren Ringbund 22 und dem radial äußeren Ringbund 30 weist der Flanschbereich 28 eine Vielzahl von axial erstreckten Ausnehmungen 32 auf, deren Anordnung auch aus den Figuren 2, 4 und 7 ersichtlich ist. In diese Ausnehmungen 32 erstreckt sich das polymere Kunststoffmaterial einer polymeren Kunststoffgleitscheibe 34 hinein, bei der es sich um den anderen Teil der Gleitlageranordnung 10 handelt. Aus Figur 8 sind komplementär zu den Ausnehmungen 32 ausgebildete Vorsprünge 36 bei der polymeren Kunststoffgleitscheibe 34 ersichtlich, die durch axialen Eingriff in die Ausnehmungen 32 die Kunststoffgleitscheibe 34 in Umfangsrichtung formschlüssig gegen Verdrehen sichern. Die polymere Kunststoffgleitscheibe 34 ist nach einer bevorzugten Ausführungsform aus POM oder PE oder aus PVDF, PTFE oder PEEK gebildet. Die Kunststoffgleitschicht 34 kann gegen das zweite Gehäuseteil 6 und insbesondere gegen die Ausnehmungen 32 geklebt, angespritzt oder geklemmt oder eingelegt sein. Man erkennt aus den Schnittdarstellungen der Figuren 3 und 4, dass die axiale Dicke der Kunststoffgleitscheibe 34 derart bemessen ist, dass sie über die axiale Stirnseite des inneren und äußeren Ringbunds 22, 30 in axialer Richtung, also in Richtung der Gehäuselängsachse 8, vorsteht und sich in den Aufnahmeraum zwischen innerem Ringbund 10 und Umfangswandung 14 des ersten Gehäuseteils 4 hineinerstreckt. Die einander zugewandten Flächen der Kunststoffgleitscheibe 34 und der metallischen Ringscheibe 20 liegen unmittelbar gegeneinander an und gleiten in Umfangsrichtung gegeneinander, wenn das zweite Gehäuseteil 6 gegenüber dem ersten Gehäuseteil 4 bei Ausübung einer Lenkbewegung bei der Kraftfahrzeugradaufhängung verdreht wird. Man erkennt aus Figur 9, dass die Reibfläche der Kunststoffgleitscheibe 34 zusätzlich in radialer Richtung erstreckte Nuten 38 aufweist, die auch in Figur 2 angedeutet sind und der Aufnahme eines optional vorgesehenen Schmiermediums dienen.

Die metallische Ringscheibe 20 und die polymere Kunststoffgleitscheibe 34 sind gegen die jeweiligen Gehäuseteile 4 bzw. 6 lagefixiert, wodurch die Gleitpartner der Gleitlageranordnung 10 definiert gegeneinander gleiten, was bei einer schwimmenden Lagerung nicht der Fall istDadurch, dass bei der Gleitlageranordnung 10 ein polymerer Gleitwerkstoff, wie vorzugsweise POM oder PE oder PVDF, PTFE oder PEEK, gegebenenfalls mit die tribologischen Eigenschaften verbessernden Füllstoffen, gegen Metall, vorzugsweise gegen Stahl, gleitet, kann der Reibwert gering und die Lebensdauer hoch gehalten werden.

## Patentansprüche

1. Federbeinlager (2) bei einer lenkbaren Kraftfahrzeugradaufhängung, mit einem ersten Gehäuseteil (4), welches gegen eine Kraftfahrzeugkarosserie abstützbar ist, und mit einem mit dem ersten Gehäuseteil (4) komplementär in Eingriff stehenden zweiten Gehäuseteil (6), welches gegenüber dem ersten Gehäuseteil (4) um eine Gehäuselängsachse (8) in Umfangsrichtung drehbar ist und gegen ein Stoßdämpferrohr fixiert ist, wobei zwischen dem ersten Gehäuseteil (4) und dem zweiten Gehäuseteil (6) eine axial wirkende Gleitlageranordnung (10) vorgesehen ist, wobei die Gleitlageranordnung (10) eine metallische Ringscheibe (20) und eine polymere Kunststoffgleitscheibe (34) umfasst, wobei die metallische Ringscheibe (20) und die polymere Kunststoffgleitscheibe (34) mit ihren einander axial zugewandten Seiten gleitend gegeneinander anliegen, **dadurch gekennzeichnet, dass** die metallische Ringscheibe (20) in dem ersten Gehäuseteil (4) in der Umfangsrichtung drehfest gehalten ist und dass die Kunststoffgleitscheibe (34) gegen das zweite Gehäuseteil (6) durch formschlüssig wirkende Mittel in der Umfangsrichtung drehfest gehalten ist.

2. Federbeinlager nach Anspruch 1, **dadurch gekennzeichnet, dass** die metallische Ringscheibe (20) eine Stahlscheibe ist.

3. Federbeinlager nach Anspruch 1 oder 2, **dadurch gekennzeichnet, dass** die metallische Ringscheibe (20) in dem Gehäuseteil in Umfangsrichtung formschlüssig drehfest gehalten ist oder in das Gehäuseteil eingepresst oder eingeklebt oder mit dem Material des Gehäuseteils umspritzt ist.

4. Federbeinlager nach Anspruch 1, 2 oder 3, **dadurch gekennzeichnet, dass** die polymere Kunststoffgleitscheibe (34) aus POM oder PE oder aus PVDF, PTFE oder PEEK gebildet ist.

5. Federbeinlager nach einem oder mehreren der vorstehenden Ansprüche, **dadurch gekennzeichnet, dass** das erste Gehäuseteil (4) ungefähr topfförmig ausgebildet ist und das zweite Gehäuseteil (6) in Richtung der Gehäuselängsachse (8) darin einsetzbar ist.

6. Federbeinlager nach einem oder mehreren der vorstehenden Ansprüche, **dadurch gekennzeichnet, dass** das eine oder das andere Gehäuseteil (4, 6) und vorzugsweise beide Gehäuseteile (4, 6) einen radial inneren Ringbund (18, 22) aufweisen, welcher die metallische Ringscheibe (20) bzw. die Kunststoffgleitscheibe (34) in dem betreffenden Gehäuseteil (4, 6) zentriert.

7. Federbeinlager nach Anspruch 6, **dadurch gekennzeichnet, dass** der Ringbund (18, 22) eine konzentrische Durchgangsöffnung (16, 24) in dem Gehäuseteil (4, 6) begrenzt.

8. Federbeinlager nach einem oder mehreren der Ansprüche 1-7, **dadurch gekennzeichnet, dass** die formschlüssig wirkenden Mittel dadurch gebildet sind, dass das Gehäuseteil (6) in axialer Richtung erstreckte Ausnehmungen (32) aufweist, in welche das Material der Kunststoffgleitscheibe (34) eingreift.

9. Federbeinlager nach Anspruch 8, **dadurch gekennzeichnet, dass** die Ausnehmungen (32) zudem in radialer Richtung erstreckt und in Umfangsrichtung aufeinanderfolgend angeordnet sind.
